# EUROPEAN PATENT APPLICATION

(11) **EP 4 513 329 A1**
(43) Date of publication of application: **26.02.2025**
(21) Application number: 24183411.8
(22) Date of filing: 20.06.2024
(51) Int. Cl.: G06F 9/455, G06F 3/06, G06F 12/00, G06F 9/50

(54) **STORAGE DEVICE SETTING PERFORMANCE ATTRIBUTION, AND METHOD OF OPERATING THE SAME**

(30) Priority: 21.08.2023 KR 20230109348; 27.11.2023 KR 20230167172; 19.04.2024 US 202418640433
(71) Applicant: Samsung Electronics Co., Ltd., Suwon-si, Gyeonggi-do 16677 (KR)
(72) Inventor: SHIN, Youkun, 16677 Suwon-si (KR); KWON, Jea-Young, 16677 Suwon-si (KR); KIM, Jaesub, 16677 Suwon-si (KR); ROH, Yangwoo, 16677 Suwon-si (KR); WANG, Hongmoon, 16677 Suwon-si (KR)
(74) Representative: Marks & Clerk LLP

(57) **Abstract**

Disclosed is a method of operating a storage device which communicates with a host device. The method includes receiving a first request indicating a setting operation of a first virtual function corresponding to a first virtual machine from the host device executing the first virtual machine, the first request including first requirement level information of the first virtual machine, setting a first performance attribution of the first virtual function, based on the first requirement level information, and providing the host device with a done response indicating that the first performance attribution is set.

## Description

### BACKGROUND

Embodiments of the present disclosure described herein relate to storage devices, and more particularly, relate to storage devices setting performance attribution and methods of operating the same.

A memory device stores data in response to a write request and outputs data stored therein in response to a read request. For example, the memory device is classified as a volatile memory device, which loses data stored therein when a power is turned off, such as a dynamic random access memory (DRAM) device or a static RAM (SRAM) device, or a non-volatile memory device, which retains data stored therein even when a power is turned off, such as a flash memory device, a phase-change RAM (PRAM), a magnetic RAM (MRAM), or a resistive RAM (RRAM).

A host device may store data in the memory device and may provide a usage environment to a user by reading the stored data. Nowadays, as the performance of the storage device is improved and the user requires various conditions, the host device may additionally generate a virtual machine (VM) in addition to a physical device such that various usage environments are provided to the user. In this case, the resource of the VM is limited by the resource of the physical device. There is required a method of efficiently managing the resource for the VM within a range of the limited resource.

### SUMMARY

Embodiments of the present disclosure provide storage devices setting performance attribution and methods of operating the same.

According to some example embodiments, a method of operating a storage device which communicates with a host device includes receiving a first request indicating a setting operation of a first virtual function corresponding to a first virtual machine from the host device executing the first virtual machine, the first request including first requirement level information of the first virtual machine, setting a first performance attribution of the first virtual function, based on the first requirement level information, and providing the host device with a done response indicating that the first performance attribution is set.

According to some example embodiments, a method of operating a storage device which communicates with a host device includes receiving a first request indicating a setting operation of a first virtual function and a second virtual function from the host device executing a first virtual machine and a second virtual machine, the first virtual function corresponding to the first virtual machine, the second virtual function corresponding to the second virtual machine, and the first request including first requirement level information of the first virtual machine and second requirement level information of the second virtual machine, setting a first performance attribution of the first virtual function, based on the first requirement level information, setting a second performance attribution of the second virtual function, based on the second requirement level information, the second performance attribution being different from the first performance attribution, and providing the host device with a done response indicating that the first and second performance attributions are set.

According to some example embodiments, a storage device includes a non-volatile memory device, a function manager that includes a physical function configured to communicate with a host device executing a virtual machine and a virtual function corresponding to the virtual machine, and an attribution manager configured to manage a resource to be provided from the non-volatile memory device to the virtual function. The physical function receives a request indicating a setting operation of the virtual function and including requirement level information of the virtual machine from the host device, determines whether a performance attribution corresponding to the requirement level information is available, with reference to the attribution manager, sets the performance attribution of the virtual function, in response to determining that the performance attribution is available, and provides the host device with a done response indicating that the performance attribution is set.

At least some of the above and other features of the invention are set out in the claims.

### BRIEF DESCRIPTION OF THE FIGURES

The above and other objects and features of the present disclosure will become apparent by describing in detail embodiments thereof with reference to the accompanying drawings.
FIG. 1 is a block diagram of an electronic device according to some example embodiments of the present disclosure.
FIG. 2 is a block diagram illustrating a storage controller of FIG. 1, according to some example embodiments of the present disclosure.
FIG. 3 is a flowchart describing a method of operating an electronic device according to some example embodiments of the present disclosure.
FIG. 4 is a flowchart describing some operations of the flowchart of FIG. 3, according to some example embodiments of the present disclosure.
FIG. 5 is a flowchart describing some operations of the flowchart of FIG. 3, according to some example embodiments of the present disclosure.
FIG. 6 is a flowchart describing some operations of the flowchart of FIG. 3, according to some example embodiments of the present disclosure.
FIG. 7 is a diagram describing a method of operating an electronic device according to some example embodiments of the present disclosure.
FIG. 8 is a diagram describing some example embodiments of the method of FIG. 7, according to some example embodiments of the present disclosure.
FIG. 9 is a diagram describing some example embodiments of the method of FIG. 7, according to some example embodiments of the present disclosure.
FIG. 10 is a diagram describing some example embodiments of the method of FIG. 7, according to some example embodiments of the present disclosure.
FIG. 11 is a diagram describing some example embodiments of the method of FIG. 7, according to some example embodiments of the present disclosure.
FIG. 12 is a graph describing data performance of an electronic device according to some example embodiments of the present disclosure.
FIG. 13 is a diagram describing physical paths of an electronic device according to some example embodiments of the present disclosure.
FIG. 14 is a diagram describing how a resource of an electronic device is differentially distributed, according to some example embodiments of the present disclosure.

### DETAILED DESCRIPTION

Below, example embodiments of the present disclosure will be described in detail and clearly to such an extent that one skilled in the art may carry out embodiments of the present disclosure easily.

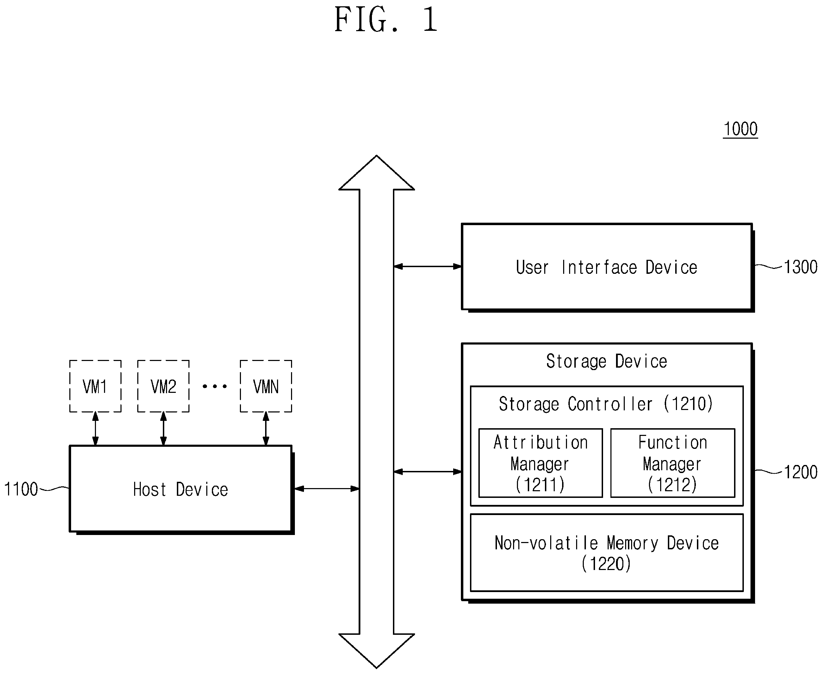

FIG. 1 is a block diagram of an electronic device according to some example embodiments of the present disclosure. Referring to FIG. 1, an electronic device 1000 may be a computing system configured to process a variety of information or to store the processed information as data. In some example embodiments, the electronic device 1000 may be implemented with a personal computer (PC), a notebook, a laptop, a server, a workstation, a tablet PC, a smartphone, a digital camera, a black box, etc. The electronic device 1000 may include a host device 1100, a storage device 1200, and a user interface device 1300.

The host device 1100 may control an overall operation of the electronic device 1000. The host device 1100 may communicate with the storage device 1200 and the user interface device 1300. For example, the host device 1100 may receive a system request through the user interface device 1300 and, based on the system request, the host device 1100 may store data in the storage device 1200, may read data stored in the storage device 1200, or may delete data stored in the storage device 1200.

The host device 1100 may support a virtual machine (VM). For example, the electronic device 1000 may execute a plurality of virtual machines VM1 to VMN. Herein, "N" is an arbitrary natural number. The electronic device 1000 may be referred to as an "actual physical machine". The host device 1100 may utilize resources (e.g., a computational resource of the host device 1100, and an input/output (I/O) speed, a storage capacity, a permitted power consumption value, a permitted heat generation value, etc. of the storage device 1200) of the electronic device 1000 to execute the plurality of virtual machines VM1 to VMN and may provide the user with an environment, in which a plurality of electronic devices including a physical machine (for example, the electronic device 1000) and VMs are used, through the user interface device 1300.

The plurality of virtual machines VM1 to VMN may support an OS which is independent of a default operating system (OS) of the electronic device 1000. For example, the electronic device 1000 may be booted up based on a power voltage (e.g., an external power or a battery power), and under the default OS, the electronic device 1000 may execute an application or may manage files. After the default OS is executed, the host device 1100 may further execute the plurality of virtual machines VM1 to VMN. Because the plurality of virtual machines VM1 to VMN are virtual devices but are devices independent of the electronic device 1000, the plurality of virtual machines VM1 to VMN may execute an OS whose type is different from that of the default OS of the electronic device 1000 or may execute a separate OS having the same type as the default OS.

Because the plurality of virtual machines VM1 to VMN are virtual devices, the plurality of virtual machines VM1 to VMN do not have an actual resource. Accordingly, the plurality of virtual machines VM1 to VMN may be implemented while the electronic device 1000 operates (e.g., while the electronic device 1000 is supplied with the power voltage and executes an operating system), and the plurality of virtual machines VM1 to VMN thus implemented may share the actual resource of the electronic device 1000. Because the resource capable of being allocated to the plurality of virtual machines VM1 to VMN is finite, there may be required a method of efficiently distributing the resource of the electronic device 1000 into the electronic device 1000 and the plurality of virtual machines VM1 to VMN within the limited range.

The storage device 1200 may communicate with the host device 1100 and the user interface device 1300. The storage device 1200 may store data received from the host device 1100, may provide the stored data to the host device 1100, or may delete the stored data in response to a request received from the host device 1100.

The storage device 1200 may include a storage controller 1210 and a non-volatile memory device 1220. Under control of the host device 1100 or depending on an algorithm of internal firmware, the storage controller 1210 may store data in the non-volatile memory device 1220, may read the data stored in the non-volatile memory device 1220, or may delete data stored in the non-volatile memory device 1220.

The storage controller 1210 may include an attribution manager 1211 and a function manager 1212. The attribution manager 1211 may manage the resource of the storage device 1200. The function manager 1212 may include functions for communication with the plurality of virtual machines VM1 to VMN.

For example, the function manager 1212 may include an SR-IOV (Single Root Input Output Virtualization) function of a PCIe (Peripheral Component Interconnect express) interface. The SR-IOV function may be a function of additionally generating virtual I/O ports in the PCIe device having a single route (or port). The storage device 1200 with the SR-IOV function may additionally generate virtual I/O ports in addition to an actual I/O port and may provide the virtual I/O ports to the virtual machines VM1 to VMN executed by the host device 1100. As such, the virtual machines VM1 to VMN may be provided with a virtual environment similar to an environment in which the virtual machines VM1 to VMN are respectively connected to a plurality of storage devices.

The SR-IOV function which is supported by the function manager 1212 may include a physical function PF and a virtual function VF. The physical function PF may be activated based on the power voltage supplied from the host device 1100. The activated physical function PF may search devices (e.g., the host device 1100 and the virtual machines VM1 to VMN) connected through the PCIe interface, may manage the found devices, and may generate the virtual function VF for communication with a virtual device among the found devices. For example, the physical function PF may generate or delete virtual functions VF respectively corresponding to the virtual machines VM1 to VMN depending on a request of the host device 1100. The generated virtual functions VF may respectively manage (e.g., may perform a function of each of) I/Os associated with the virtual machines VM1 to VMN.

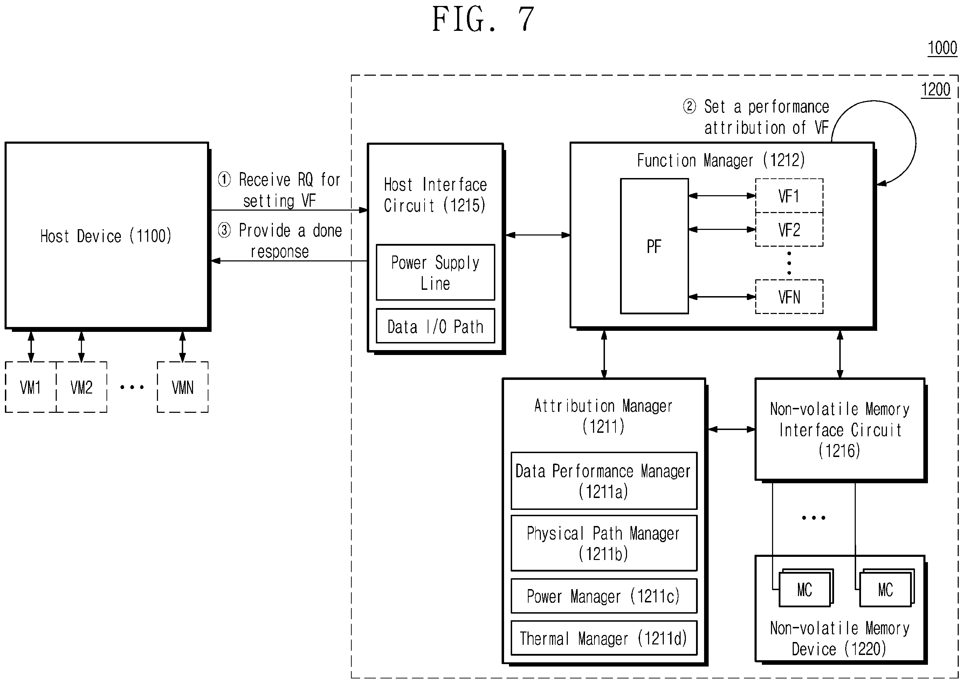

In some example embodiments, the attribution manager 1211 may manage the resource of the storage device 1200 to be provided to the virtual functions VF of the function manager 1212. For example, the function manager 1212 may include the virtual functions VF respectively corresponding to the virtual machines VM1 to VMN. The attribution manager 1211 may manage at least one of a data bandwidth (e.g., a data I/O speed permitted for a specific virtual function VF), a physical path (e.g., a memory channels and a memory way) between dedicated memory chips of the non-volatile memory device 1220 and the storage controller 1210, a permitted maximum power consumption value, and/or a permitted maximum heat generation temperature value, for each of the virtual functions VF. The resource of the storage device 1200 which is managed by the attribution manager 1211 may be also referred to as "performance attribution". The performance attribution will be described in detail with reference to FIGS. 7 to 11.

The non-volatile memory device 1220 may include a plurality of memory chips. Under control of the storage controller 1210, the plurality of memory chips may store data or may provide the stored data to the storage controller 1210. The memory chips of the non-volatile memory device 1220 may retain the stored data even though a power supplied to the non-volatile memory device 1220 is turned off. For example, the memory chips of the non-volatile memory device 1220 may be implemented with a flash memory device, a phase-change RAM (PRAM), a magnetic RAM (MRAM), a resistive RAM (RRAM), etc.

The user interface device 1300 may provide an interface between the electronic device 1000 and the user. The user interface device 1300 may provide the user with an environment similar to an environment in which a plurality of electronic devices including the electronic device 1000 being a physical device and the plurality of virtual machines VM1 to VMN are used. For example, the user interface device 1300 may include devices which provide the interaction with the user, such as a display device, a touch section, a monitor, a mouse, a keyboard, a speaker, and a microphone.

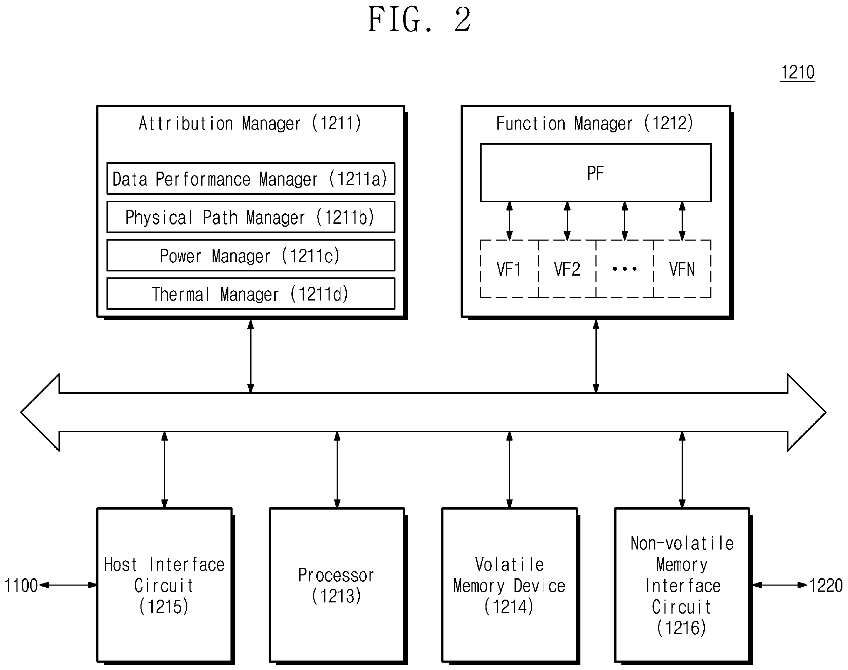

FIG. 2 is a block diagram illustrating a storage controller of FIG. 1, according to some example embodiments of the present disclosure. Referring to FIGS. 1 and 2, the storage controller 1210 may communicate with the host device 1100 and the non-volatile memory device 1220. The storage controller 1210 may include the attribution manager 1211, the function manager 1212, a processor 1213, a volatile memory device 1214, a host interface circuit 1215, and a non-volatile memory interface circuit 1216.

The attribution manager 1211 may allocate the resource of the storage device 1200 to virtual functions VF1 to VFN of the function manager 1212, may adjust the allocated resource, or may retrieve (for example, deallocate) the allocated resource. The attribution manager 1211 may store information about the allocated resource. The attribution manager 1211 may include a data performance manager 1211a, a physical path manager 1211b, a power manager 1211c, and a thermal manager 1211d.

The data performance manager 1211a may manage the data bandwidth to be provided to each of the virtual functions VF1 to VFN. The physical path manager 1211b may exclusively allocate corresponding memory chips to the virtual functions VF1 to VFN by adjusting the mapping relationship between physical paths connected to the memory chips of the non-volatile memory device 1220 and the virtual functions VF1 to VFN. The power manager 1211c may manage a maximum power consumption value permitted for each of the virtual functions VF1 to VFN. The thermal manager 1211d may manage a maximum heat generation temperature value permitted for each of the virtual functions VF1 to VFN.

The function manager 1212 may include functions for communication with the plurality of virtual machines VM1 to VMN executable by the host device 1100. In detail, the function manager 1212 may include the physical function PF. The physical function PF may be activated based on the power voltage provided from the host device 1100. The activated physical function PF may generate the plurality of virtual functions VF1 to VFN for the plurality of virtual machines VM1 to VMN executable by the host device 1100, based on a request from the host device 1100. The plurality of virtual functions VF1 to VFN may respectively manage the I/Os for the plurality of virtual machines VM1 to VMN under control of the physical function PF.

The processor 1213 may control an overall operation of the storage controller 1210. The volatile memory device 1214 may be used as a main memory, a buffer memory, or a cache memory of the storage controller 1210.

In some example embodiments, at least some of the functions of the attribution manager 1211 and the function manager 1212 may be implemented with a firmware module. For example, the processor 1213 may implement at least some of the functions of the attribution manager 1211 and the function manager 1212 by loading instructions stored in the non-volatile memory device 1220 to the volatile memory device 1214 and executing the loaded instructions. However, the present disclosure is not limited thereto. For example, the attribution manager 1211 and the function manager 1212 may be implemented with separate hardware or may be implemented with a combination of hardware and software.

The storage controller 1210 may communicate with the host device 1100 through the host interface circuit 1215. In some example embodiments, the host interface circuit 1215 may be implemented based on at least one of various interfaces such as a serial ATA (SATA) interface, a peripheral component interconnect express (PCIe) interface, a serial attached SCSI (SAS), a non-volatile memory express (NVMe) interface, and a universal flash storage (UFS) interface.

In some example embodiments, the attribution manager 1211 and the function manager 1212 may be implemented with the host interface circuit 1215. For example, the host interface circuit 1215 may support the PCIe interface. At least some of the functions of the attribution manager 1211 and the function manager 1212 may be functions included in the PCIe interface or may be functions implemented by utilizing the function of the PCIe interface.

The storage controller 1210 may communicate with the non-volatile memory device 1220 through the non-volatile memory interface circuit 1216. Physical paths connected to the plurality of memory chips of the non-volatile memory device 1220 may pass through the non-volatile memory interface circuit 1216. In some example embodiments, the non-volatile memory interface circuit 1216 may be implemented based on the NAND interface.

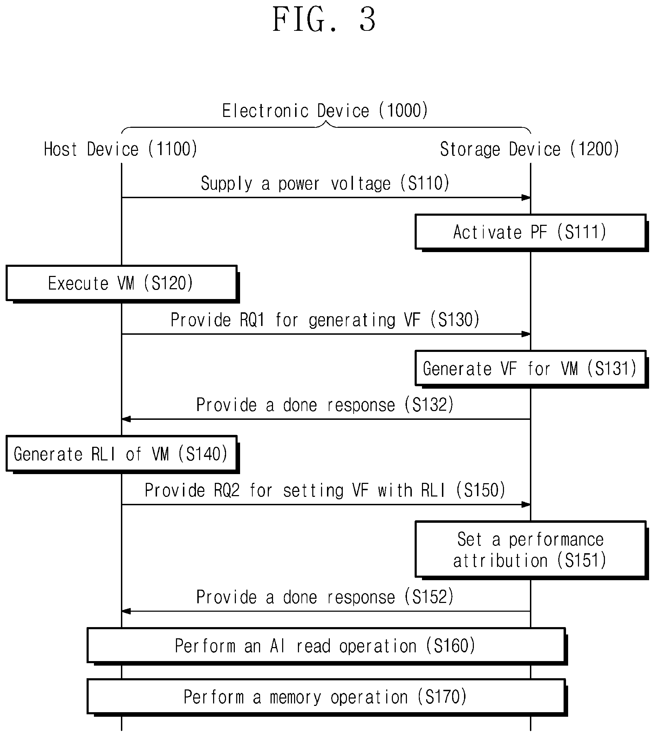

FIG. 3 is a flowchart describing a method of operating an electronic device according to some example embodiments of the present disclosure. Referring to FIG. 3, the electronic device 1000 may include the host device 1100 and the storage device 1200.

In operation S110, the host device 1100 may supply a power voltage to the storage device 1200. For example, before operation S110, the host device 1100 may be physically connected to the storage device 1200 but may fail to identify (or recognize) the storage device 1200. The host device 1100 may be booted up based on an external power or a battery power. The host device 1100 thus booted up may supply the power voltage to the storage device 1200.

In operation S111, the storage device 1200 may activate the physical function PF based on the power voltage received from the host device 1100. The host device 1100 may identify the storage device 1200 through the activated physical function PF, and the I/O between the host device 1100 and the storage device 1200 may be activated.

In operation S120, the host device 1100 may execute a virtual machine VM. The virtual machine VM may be a separate virtual electronic device. The virtual machine VM may share the resource of the electronic device 1000 physically.

In operation S130, the host device 1100 may provide the storage device 1200 with a first request RQ1 for generating the virtual function VF. The virtual function VF may be a function for allocating a dedicated resource of the storage device 1200 to the virtual machine VM executed in operation S120. The virtual function VF may exclusively provide a virtualized I/O port of the storage device 1200 to the virtual machine VM. Through the virtual function VF, the virtual machine VM may store data in the storage device 1200 or may read the stored data.

In operation S131, the activated physical function PF of the storage device 1200 may generate the virtual function VF for the virtual machine VM based on the first request RQ1. The virtual function VF may have performance attribution defining the level of the resource which the storage device 1200 provides to the virtual machine VM. Immediately after the virtual machine VM is generated, a value of the performance attribution of the virtual function VF may be in an empty state or may be set to a default value.

In operation S132, the storage device 1200 may provide the host device 1100 with a done response indicating that the virtual function VF is generated.

In operation S140, the host device 1100 may generate requirement level information RLI for the virtual machine VM based on the done response in operation S132. The requirement level information RLI may indicate a performance level required for the virtual machine VM. For example, the requirement level information RLI may indicate an I/O speed, a storage capacity, a permitted power consumption value, and/or a permitted heat generation value of the storage device 1200 for the virtual machine VM or may include information which is used to determine the I/O speed, the storage capacity, the permitted power consumption value, and/or the permitted heat generation value. The requirement level information RLI may be individually determined depending on a request of the user or may be determined by an application executed in the host device 1100. However, these are only examples, and other features and/or values may be used in the requirement level information RLI. In some example embodiments, the requirement level information RLI may represent a minimum allocation for the virtual machine VM to perform required tasks, or may represent a desired (or determined, etc.) minimum allocation for the virtual machine VM to perform required tasks at a desired (or determined, etc.) level, or may alternatively represent a desired (or determined, etc.) allocation for the virtual machine VM to perform tasks at a desired (or determined, etc.) level. However, these are only examples, and the present disclosure is not limited thereto.

In operation S150, the host device 1100 may provide the storage device 1200 with a second request RQ2 for setting the virtual function VF. The second request RQ2 may include the requirement level information RLI of the virtual machine VM. The requirement level information RLI may indicate a resource level which the virtual machine VM requires (or, desires, etc.) from the virtual function VF.

In operation S151, the storage device 1200 may set the performance attribution of the virtual function VF based on the requirement level information RLI. The storage device 1200 may store attribution information AI indicating the set performance attribution. After the performance attribution is set, the virtual function VF may provide the virtual machine VM with the resource satisfying the performance level which the virtual machine VM requires (or, desires, etc.). For example, the virtual function VF whose performance attribution is set may provide the virtual machine VM with a storage resource satisfying a data write speed, a data read speed, and/or a storage capacity, which have levels required by the virtual machine VM.

In operation S152, the storage device 1200 may provide the host device 1100 with a done response indicating that the performance attribution is set.

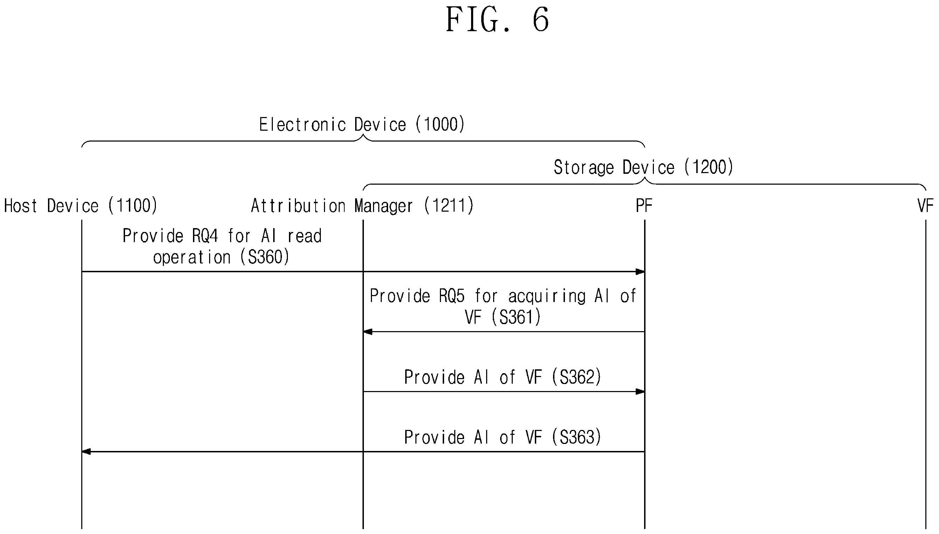

In operation S160, the electronic device 1000 may perform an attribution information (AI) read operation. The attribution information read operation may be an operation of providing the host device 1100 with the attribution information AI indicating the performance attribution set in operation S151. The attribution information read operation will be described in detail with reference to FIG. 6.

In operation S170, the electronic device 1000 may perform a memory operation. In detail, the host device 1100 may provide the storage device 1200 with a request indicating the memory operation. The storage device 1200 may perform the memory operation.

The memory operation may refer to operations of the storage device 1200, which are performed by the virtual function VF whose performance attribution is set. For example, the memory operation may include the following requested by the virtual machine VM: a write operation for storing data in the storage device 1200, a read operation for obtaining the stored data, a delete operation for removing the stored data, a re-setting operation for changing the performance attribution depending on any other requirement level information, and/or a deallocation operation for deleting the virtual function VF corresponding to the virtual machine VM gone out of use.

In some example embodiments, operation S160 and operation S170 may be repeatedly performed depending on various orders. For example, the electronic device 1000 may perform operation S170 and may then perform operation S160. As another example, the electronic device 1000 may perform operation S170 plural times.

In some example embodiments, the electronic device 1000 may support VF setting for a plurality of virtual machines. For example, operation S120, operation S130, operation S131, operation S132, operation S140, operation S150, operation S151, and operation S152 may include executing a plurality of virtual machines, generating a plurality of virtual functions respectively corresponding to the plurality of virtual machines, and setting the performance attribution for each of the plurality of virtual machines.

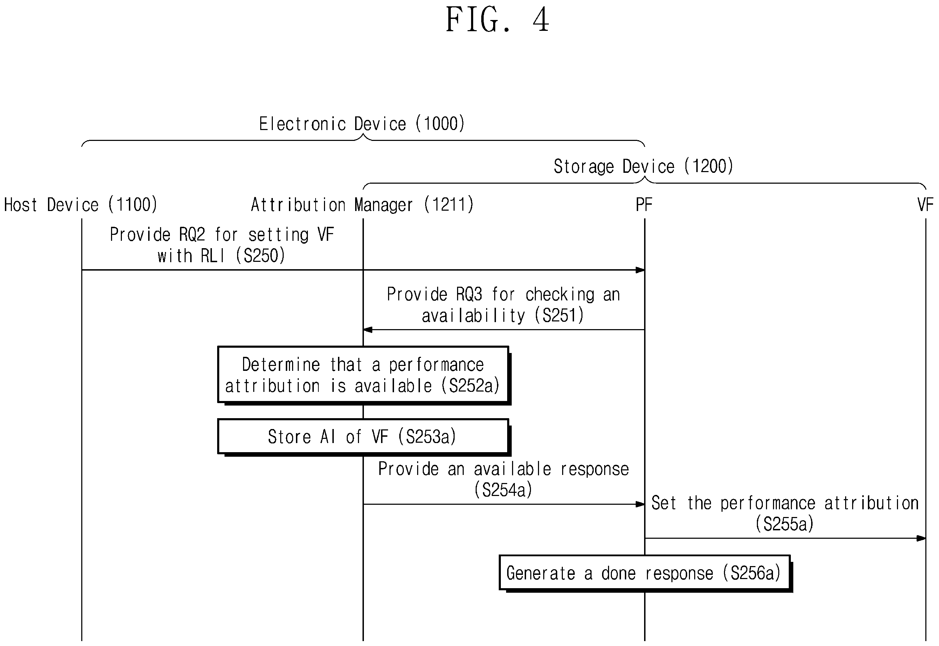

FIG. 4 is a flowchart describing some operations of the flowchart of FIG. 3, according to some example embodiments of the present disclosure. Referring to FIG. 4, the electronic device 1000 may include the host device 1100 and the storage device 1200. The storage device 1200 may include the attribution manager 1211, the physical function PF, and the virtual function VF. The physical function PF may be activated based on the power voltage received from the host device 1100. The virtual function VF may be generated by the activated physical function PF. Operation S250 may correspond to operation S150 of FIG. 3. Operation S251, operation S252a, operation S253a, operation 254a, operation 255b, and operation S256a may correspond to operation S151 of FIG. 3.

In operation S250, the host device 1100 may provide the physical function PF with the second request RQ2 for setting the virtual function VF. The second request RQ2 may include the requirement level information RLI indicating a resource level which the virtual machine VM requires (or, desires, etc.) from the virtual function VF.

In operation S251, the physical function PF may provide the attribution manager 1211 with a third request RQ3 for checking whether the requirement level information RLI is available. The attribution manager 1211 may manage information about a resource which the storage device 1200 is capable of supporting, a resource allocated to the virtual function VF, a free resource not yet allocated, etc.

In operation S252a, based on the third request RQ3, the attribution manager 1211 may determine whether the performance attribution corresponding to the requirement level information RLI is available. In some example embodiments, such as of FIG. 4, the attribution manager 1211 may determine that the performance attribution corresponding to the requirement level information RLI is available.

In operation S253a, the attribution manager 1211 may store the attribution information AI of the virtual function VF in response to determining that the performance attribution is available. The attribution information AI may indicate the performance attribution determined to be available in operation S252a. The stored attribution information AI may be used to check the availability of the performance attribution for another virtual machine VM subsequently. Also, the stored attribution information AI may be used in the attribution information read operation from the host device 1100.

In operation S254a, the attribution manager 1211 may provide an available response to the physical function PF in response to determining that the performance attribution is available.

In operation S255a, the physical function PF may set the performance attribution of the virtual function VF to a value corresponding to the requirement level information RLI based on the available response. After the performance attribution is set, the virtual function VF may provide the virtual machine VM with the resource of the storage device 1200, which satisfies the resource level required by the virtual machine VM.

In operation S256a, the physical function PF may generate a done response indicating that the performance attribution is set. The generated done response may be provided to the host device 1100 in operation S152 of FIG. 3.

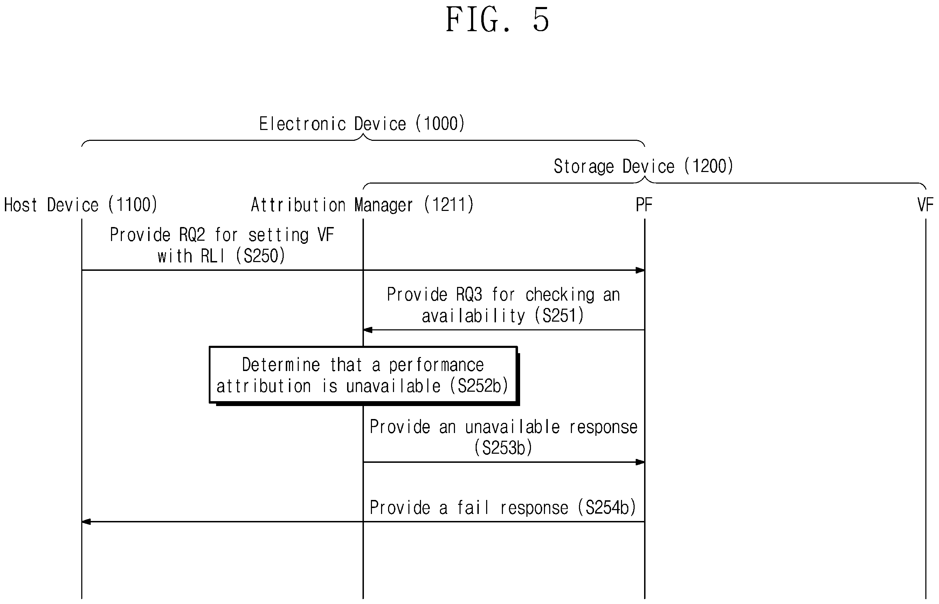

FIG. 5 is a flowchart describing some operations of the flowchart of FIG. 3, according to some example embodiments of the present disclosure. Referring to FIG. 5, the electronic device 1000 may include the host device 1100 and the storage device 1200. The storage device 1200 may include the attribution manager 1211, the physical function PF, and the virtual function VF. The physical function PF may be activated based on the power voltage received from the host device 1100. The virtual function VF may be generated by the activated physical function PF. Operation S250 may correspond to operation S150 of FIG. 3. Operation S251, operation S252b, operation S253b, and operation S254b may correspond to operation S151 of FIG. 3. Operation S250 and operation S251 are similar to operation S250 and operation S251 of FIG. 4, and thus, additional description will be omitted to avoid redundancy.

In operation S252b, based on the third request RQ3, the attribution manager 1211 may determine whether the performance attribution corresponding to the requirement level information RLI is available. In some example embodiments, such as of FIG. 5, the attribution manager 1211 may determine that the performance attribution corresponding to the requirement level information RLI is unavailable.

In operation S253b, the attribution manager 1211 may provide an unavailable response to the physical function PF in response to determining that the performance attribution is unavailable.

In operation S254b, based on the unavailable response, the physical function PF may provide the host device 1100 with a fail response indicating that the performance attribution corresponding to the requirement level information RLI is not set. Because the performance attribution is not set, in this case, operation S152 of FIG. 3 may be omitted. The host device 1100 may change a performance level required by the virtual machine VM based on the fail response and may again attempt the settings of the virtual function VF depending on the changed performance level.

FIG. 6 is a flowchart describing some operations of the flowchart of FIG. 3, according to some example embodiments of the present disclosure. Referring to FIG. 6, the electronic device 1000 may include the host device 1100 and the storage device 1200. The storage device 1200 may include the attribution manager 1211, the physical function PF, and the virtual function VF. The physical function PF may be activated based on the power voltage received from the host device 1100. The virtual function VF may be generated by the activated physical function PF. Operation S360, operation S361, operation S362, and operation S363 may correspond to operation S160 of FIG. 3.

In operation S360, the host device 1100 may provide the physical function PF with a fourth request RQ4 for the attribution information read operation. In operation S361, based on the fourth request RQ4 from the host device 1100, the physical function PF may provide the attribution manager 1211 with a fifth request RQ5 for obtaining the attribution information AI corresponding to the performance attribution of the virtual function VF. In operation S362, based on the fifth request RQ5, the attribution manager 1211 may provide the physical function PF with the attribution information AI of the virtual function VF stored in operation S151 of FIG. 3. In operation S363, the physical function PF may provide the attribution information AI of the virtual function VF to the host device 1100.

In some example embodiments, the attribution information read operation may be performed with respect to attribution information of a plurality of virtual functions VF. For example, unlike the example illustrated in FIG. 6, before operation S360, the physical function PF may generate the plurality of virtual functions VF. The physical function PF may set the performance attribution of each of the virtual functions VF. The attribution manager 1211 may store attribution information indicating the performance attribution of each of the virtual functions VF. Based on the fourth request RQ4, the physical function PF may retrieve attribution information about all the virtual functions VF, which are currently managed, with reference to the attribution manager 1211 and may provide the host device 1100 with the attribution information of all the virtual functions VF thus found.

FIG. 7 is a diagram describing a method of operating an electronic device according to some example embodiments of the present disclosure. Referring to FIG. 7, the electronic device 1000 may include the host device 1100 and the storage device 1200. The storage device 1200 may include the attribution manager 1211, the function manager 1212, the host interface circuit 1215, the non-volatile memory interface circuit 1216, and the non-volatile memory device 1220.

The host device 1100 may execute the plurality of virtual machines VM1 to VMN. The plurality of virtual machines VM1 to VMN may share the resource with the electronic device 1000.

The attribution manager 1211 may manage attribution information about the plurality of virtual functions VF1 to VFN of the function manager 1212. The attribution manager 1211 may include the data performance manager 1211a, the physical path manager 1211b, the power manager 1211c, and the thermal manager 1211d.

The function manager 1212 may include the physical function PF and the plurality of virtual functions VF1 to VFN. The physical function PF may be activated based on the power voltage received from the host device 1100. The activated physical function PF may generate the plurality of virtual functions VF1 to VFN based on the request from the host device 1100. The plurality of virtual functions VF1 to VFN may manage I/Os between the plurality of virtual machines VM1 to VMN and the storage device 1200.

The host interface circuit 1215 may include a power supply line and a data I/O path. The power supply line may provide the power voltage received from the host device 1100 to components of the storage device 1200.

The power voltage received through the power supply line may be limited by the host device 1100, and a total power consumption value which the storage device 1200 is capable of utilizing may be limited by the power voltage. The power manager 1211c may adjust the maximum power consumption value permitted for each of the virtual functions VF1 to VFN by distributing the limited maximum power consumption value to the virtual functions VF1 to VFN.

The data I/O path may be used for the storage device 1200 to receive data depending on the write operation and to output data depending on the read operation. The size of a total data bandwidth which the data I/O path is capable of utilizing for data transmission may be finite. The data performance manager 1211a may allocate the data bandwidth to each of the virtual functions VF1 to VFN by distributing the limited total data bandwidth to the virtual functions VF1 to VFN.

The non-volatile memory interface circuit 1216 may be connected to the non-volatile memory device 1220. The non-volatile memory device 1220 may include a plurality of memory chips MC. Physical paths connected to the plurality of memory chips MC may be connected to the virtual functions VF1 to VFN of the function manager 1212 through the non-volatile memory interface circuit 1216. The physical path manager 1211b may exclusively distribute the memory chips MC to the respective virtual functions VF1 to VFN by distributing the physical paths connected to the memory chips MC to the virtual functions VF1 to VFN.

Below, the method of operating the electronic device 1000 according to some example embodiments of the present disclosure will be described.

In a first operation ①, the storage device 1200 may receive a request RQ indicating a setting operation of the virtual function VF corresponding to the virtual machine VM executed in the host device 1100. The virtual machine VM may be one of the virtual machines VM1 to VMN executable in the host device 1100. The virtual function VF may be one corresponding to the virtual machine VM from among the virtual functions VF1 to VFN generated by the function manager 1212. The request RQ may include requirement level information of the virtual machine VM. The requirement level information may indicate a performance level which the virtual machine VM requires (or, desires, etc.) from the virtual function VF.

In a second operation ②, the function manager 1212 may set the performance attribution of the virtual function VF based on the request RQ. For example, the function manager 1212 may determine whether the requirement level information is available, with reference to the attribution manager 1211, may store pieces of attribution information indicating the performance attribution corresponding to the requirement level information determined to be available in the attribution manager 1211, and may set the performance attribution of the virtual function VF.

In a third operation ③, the function manager 1212 may provide a done response, which indicates that the performance attribution of the virtual function VF is set, to the host device 1100 through the host interface circuit 1215.

In some example embodiments, the electronic device 1000 may set the performance attribution of each of a plurality of virtual functions VF. For example, the host device 1100 may execute the first and second virtual machines VM1 and VM2. The storage device 1200 may receive the request RQ from the host device 1100. The request RQ may indicate the setting operation of the first virtual function VF1 corresponding to the first virtual machine VM1 and the setting operation of the second virtual function VF2 corresponding to the second virtual machine VM2. The request RQ may include first requirement level information of the first virtual machine VM1 and second requirement level information of the second virtual machine VM2. The storage device 1200 may set first performance attribution of the first virtual function VF1 based on the first requirement level information. The storage device 1200 may set second performance attribution of the second virtual function VF2 based on the second requirement level information. The storage device 1200 may provide the host device 1100 with a done response indicating that the first performance attribution is set and the second performance attribution is set.

In some example embodiments, the electronic device 1000 may differentially set the performance attribution of each of the plurality of virtual functions VF. For example, the storage device 1200 may receive the request RQ including the first requirement level information of the first virtual machine VM1 and the second requirement level information of the second virtual machine VM2 from the host device 1100. The storage device 1200 may set the first performance attribution of the first virtual function VF1 based on the first requirement level information. The storage device 1200 may set the second performance attribution of the second virtual function VF2 based on the second requirement level information. In this case, the second performance attribution may be different from the first performance attribution.

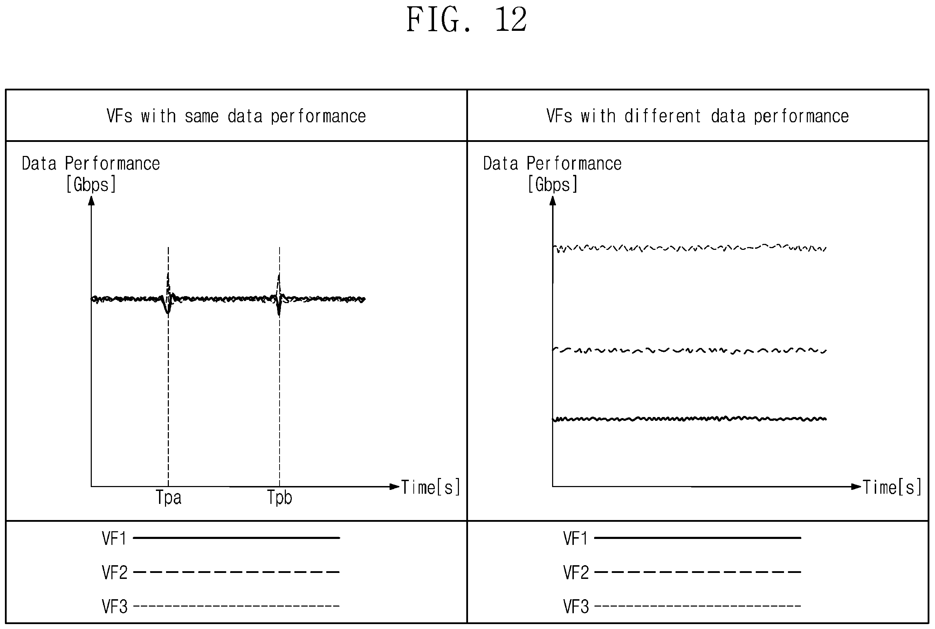

As the storage device 1200 differentially sets the performance attribution for each virtual function VF, the resource may be differentially distributed for each virtual machine VM of the host device 1100. As such, a flexible system environment may be provided to the user, the bottleneck between the virtual machines VM or the decrease in the I/O speed due to the limitation on the bandwidth may be suppressed, and the efficiency of resource distribution in the whole system may be improved. This will be described in detail with reference to FIG. 12.

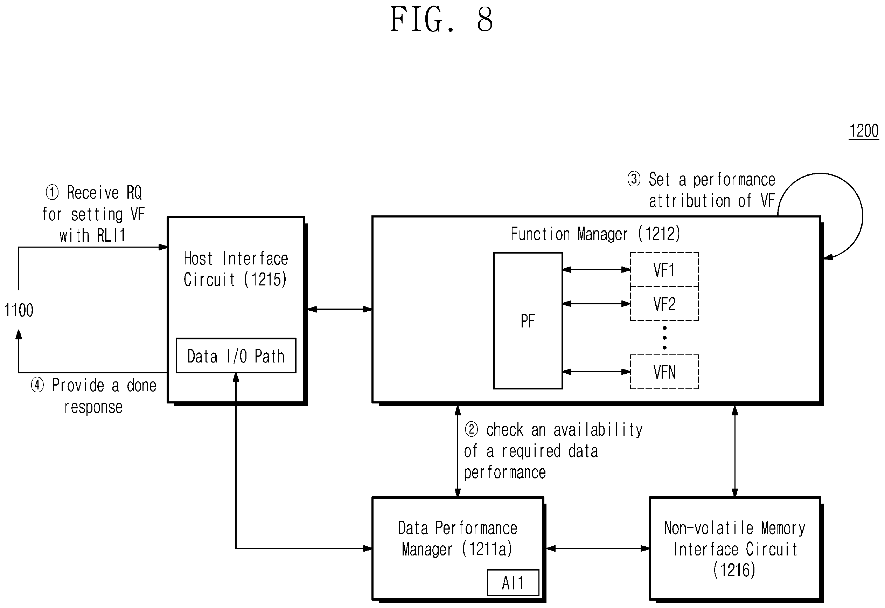

FIG. 8 is a diagram describing some example embodiments of the method of FIG. 7, according to some example embodiments of the present disclosure. Referring to FIGS. 7 and 8, the storage device 1200 may communicate with the host device 1100. The storage device 1200 may include the data performance manager 1211a, the function manager 1212, the host interface circuit 1215, and the non-volatile memory interface circuit 1216.

The data performance manager 1211a may store first attribution information AI1. The first attribution information AI1 may indicate performance attributions defining data bandwidths allocated to the virtual functions VF1 to VFN.

The function manager 1212 may include the physical function PF and the plurality of virtual functions VF1 to VFN. The plurality of virtual functions VF1 to VFN may correspond to the plurality of virtual machines VM1 to VMN executable by the host device 1100.

The host interface circuit 1215 may include a data I/O path. The total data bandwidth of the data I/O path may be distributed to the virtual functions VF1 to VFN by the data performance manager 1211a.

Below, the method of operating the electronic device 1000 according to some example embodiments of the present disclosure will be described.

In a first operation ①, the storage device 1200 may receive the request RQ indicating the setting operation of the virtual function VF. The virtual function VF may be one of the plurality of virtual functions VF1 to VFN generated by the function manager 1212. The virtual function VF may correspond to one of the virtual machines VM1 to VMN executable by the host device 1100. The request RQ may include first requirement level information RLI1. The first requirement level information RLI1 may indicate a performance level required by the virtual machine VM corresponding to the virtual function VF targeted for the setting operation.

In a second operation ②, the function manager 1212 may determine whether a performance attribution corresponding to the first requirement level information RLI1 is available, with reference to the data performance manager 1211a. The performance attribution may define the data bandwidth (e.g., data performance) allocated to the virtual function VF targeted for the setting operation. When it is determined that the performance attribution is unavailable, the function manager 1212 may provide a fail response to the host device 1100. When it is determined that the performance attribution is available, the function manager 1212 may store the first attribution information AI1 indicating the performance attribution in the data performance manager 1211a and may then perform a next operation.

In a third operation ③, the function manager 1212 may set the performance attribution of the virtual function VF, which corresponds to the first requirement level information RLI1, in response to determining that the performance attribution corresponding to the first requirement level information RLI1 is available.

In a fourth operation ④, the function manager 1212 may provide a done response, which indicates that the performance attribution of the virtual function VF is set, to the host device 1100 through the host interface circuit 1215.

In some example embodiments, the electronic device 1000 may differentially set the performance attribution of each of the plurality of virtual functions VF. For example, the storage device 1200 may receive the request RQ indicating a setting operation of the first and second virtual functions VF1 and VF2 from the host device 1100. Based on the request RQ, the storage device 1200 may set a first data bandwidth of the first virtual function VF1 and may set a second data bandwidth of the second virtual function VF2. In this case, the first data bandwidth may be different from the second data bandwidth. For example, the first data bandwidth may be wider than the second data bandwidth.

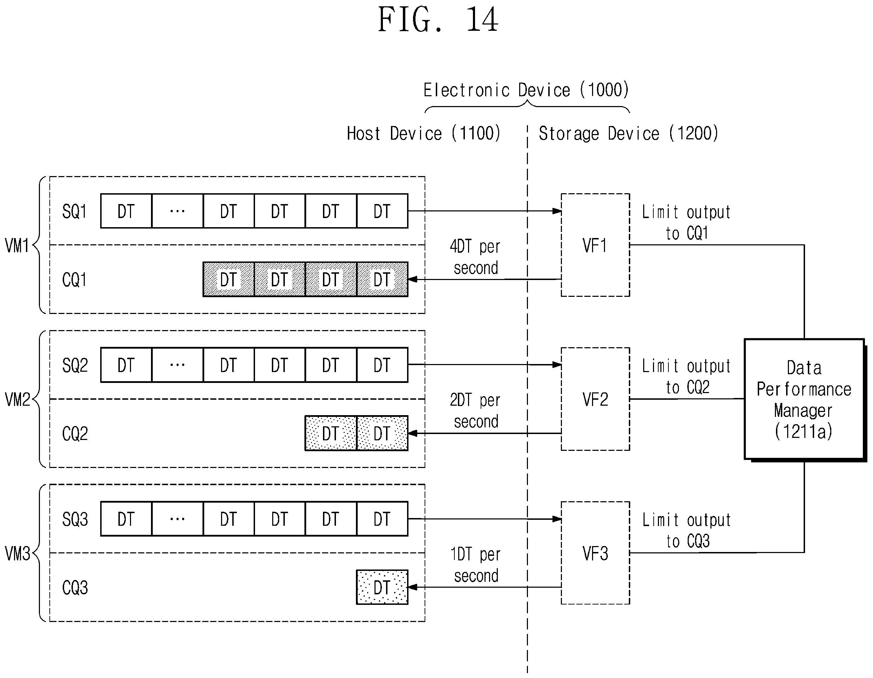

In some example embodiments, the electronic device 1000 may adjust the bandwidth of the virtual function VF based on the NVMe protocol. For example, a storage device may limit the bandwidth of the virtual function VF by adjusting a speed of a data token to be written in a completion queue of the virtual machine VM. This will be described in detail with reference to FIG. 14.

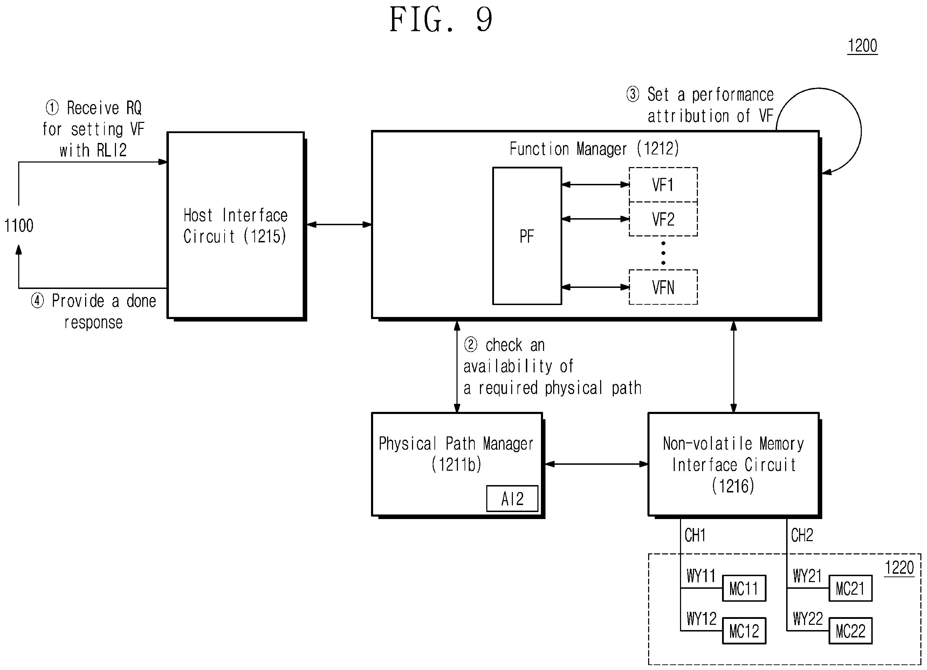

FIG. 9 is a diagram describing some example embodiments of the method of FIG. 7, according to some example embodiments of the present disclosure. Referring to FIGS. 7 and 9, the storage device 1200 may communicate with the host device 1100. The storage device 1200 may include the physical path manager 1211b, the function manager 1212, the host interface circuit 1215, the non-volatile memory interface circuit 1216, and the non-volatile memory device 1220.

The non-volatile memory device 1220 may include memory chips MC11, MC12, MC21, and MC22. A memory channel CH1 may include memory ways WY11 and WY12. A memory channel CH2 may include memory ways WY21 and WY22. The memory ways WY11, WY12, WY21, and WY22 may be respectively connected to the memory chips MC11, MC12, MC21, and MC22. The memory channels CH1 and CH2 and the memory ways WY11, WY12, WY21, and WY22 may be referred to as a "physical path". The physical path may be connected from the non-volatile memory device 1220 to the function manager 1212 through the non-volatile memory interface circuit 1216.

For better understanding of the present disclosure, four memory chips are illustrated, but the present disclosure is not limited thereto. The number of memory chips may increase or decrease, and the arrangement of the memory chips may be changed. As such, the number of memory channels and the number of memory ways may also increase or decrease.

The physical path manager 1211b may store second attribution information AI2. The second attribution information AI2 may indicate performance attributions defining the mapping relationship between the physical paths connected to the memory chips MC11, MC12, MC21, and MC22 of the non-volatile memory device 1220 and the plurality of virtual functions VF1 to VFN. For example, the physical path manager 1211b may allocate memory chips to each of the plurality of virtual functions VF1 to VFN physically and exclusively by allocating physical paths connected to the memory chips to the plurality of virtual functions VF1 to VFN.

That is, the same memory chip may not be shared by the plurality of virtual functions VF1 to VFN, instead, a dedicated memory chip may be allocated to each of the plurality of virtual functions VF1 to VFN. In this scenario, the reduction in speed due to bottlenecks between the virtual machines VM1 to VMN may be mitigated, and the security between the virtual machines VM1 to VMN may be improved (e.g., data of a specific virtual machine VM may be suppressed from exposed to any other virtual machine VM).

The function manager 1212 may include the physical function PF and the plurality of virtual functions VF1 to VFN. The plurality of virtual functions VF1 to VFN may correspond to the plurality of virtual machines VM1 to VMN executable by the host device 1100.

Below, the method of operating the electronic device 1000 according to some example embodiments of the present disclosure will be described.

In a first operation ①, the storage device 1200 may receive the request RQ indicating the setting operation of the virtual function VF. The virtual function VF may be one of the plurality of virtual functions VF1 to VFN generated by the function manager 1212. The virtual function VF may correspond to one of the virtual machines VM1 to VMN executable by the host device 1100. The request RQ may include second requirement level information RLI2. The second requirement level information RLI2 may indicate a performance level required by the virtual machine VM corresponding to the virtual function VF targeted for the setting operation.

In a second operation ②, the function manager 1212 may determine whether a performance attribution corresponding to the second requirement level information RLI2 is available, with reference to the physical path manager 1211b. The performance attribution may define at least one physical path connected to at least one memory chip exclusively allocated to the virtual function VF from among the memory chips MC11, MC12, MC21, and MC22. For example, the physical path may include a memory channel, a memory way, etc. When it is determined that the performance attribution is unavailable, the function manager 1212 may provide a fail response to the host device 1100. When it is determined that the performance attribution is available, the function manager 1212 may store the second attribution information AI2 indicating the performance attribution in the physical path manager 1211b and may then perform a next operation.

In a third operation ③, the function manager 1212 may set the performance attribution corresponding to the second requirement level information RLI2 in response to determining that the performance attribution corresponding to the second requirement level information RLI2 is available.

In a fourth operation ④, the function manager 1212 may provide a done response, which indicates that the performance attribution of the virtual function VF is set, to the host device 1100 through the host interface circuit 1215.

In some example embodiments, the electronic device 1000 may differentially set the performance attribution of each of the plurality of virtual functions VF. For example, the storage device 1200 may receive the request RQ indicating a setting operation of the first and second virtual functions VF1 and VF2 from the host device 1100. Based on the request RQ, the storage device 1200 may set a first physical path of the first virtual function VF1 and may set a second physical path of the second virtual function VF2.

In this case, the first physical path and the second physical path may be different from each other. For example, a first I/O path between the first virtual function VF1 and first memory chips allocated to the first virtual function VF1 may be physically separated from a second I/O path between the second virtual function VF2 and second memory chips allocated to the second virtual function VF2. That is, an environment of I/O isolation may be provided to the first and second virtual functions VF1 and VF2. Also, the number of first memory chip exclusively allocated to the first virtual function VF1 may be different from the number of second memory chip exclusively allocated to the second virtual function VF2.

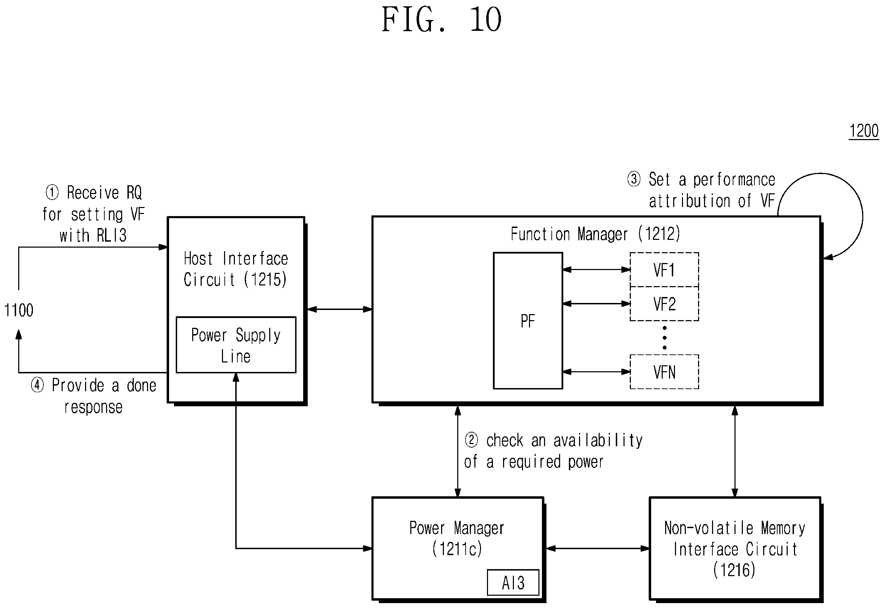

FIG. 10 is a diagram describing some example embodiments of the method of FIG. 7, according to some example embodiments of the present disclosure. Referring to FIGS. 7 and 10, the storage device 1200 may communicate with the host device 1100. The storage device 1200 may include the power manager 1211c, the function manager 1212, the host interface circuit 1215, and the non-volatile memory interface circuit 1216.

The power manager 1211c may store third attribution information AI3. The third attribution information AI3 may indicate performance attributions defining maximum power consumption values permitted for the respective virtual functions VF1 to VFN.

The function manager 1212 may include the physical function PF and the plurality of virtual functions VF1 to VFN. The plurality of virtual functions VF1 to VFN may correspond to the plurality of virtual machines VM1 to VMN executable by the host device 1100.

The host interface circuit 1215 may include a power supply line. The power supply line may provide the power voltage received from the host device 1100 to the storage device 1200. The power voltage received through the power supply line may be distributed to the virtual functions VF1 to VFN by the power manager 1211c. The maximum power consumption value to be permitted for each virtual function VF may be determined based on the distributed power voltage.

Below, the method of operating the electronic device 1000 according to some example embodiments of the present disclosure will be described.

In a first operation ①, the storage device 1200 may receive the request RQ indicating the setting operation of the virtual function VF. The virtual function VF may be one of the plurality of virtual functions VF1 to VFN generated by the function manager 1212. The virtual function VF may correspond to one of the virtual machines VM1 to VMN executable by the host device 1100. The request RQ may include third requirement level information RLI3. The third requirement level information RLI3 may indicate a performance level required by the virtual machine VM corresponding to the virtual function VF targeted for the setting operation.

In a second operation ②, the function manager 1212 may determine whether a performance attribution corresponding to the third requirement level information RLI3 is available, with reference to the power manager 1211c. The performance attribution may define the maximum power consumption value which is permitted for the virtual function VF targeted for the setting operation. When it is determined that the performance attribution is unavailable, the function manager 1212 may provide a fail response to the host device 1100. When it is determined that the performance attribution is available, the function manager 1212 may store the third attribution information AI3 indicating the performance attribution in the power manager 1211c and may then perform a next operation.

In a third operation ③, the function manager 1212 may set the performance attribution of the virtual function VF, which corresponds to the third requirement level information RLI3, in response to determining that the performance attribution corresponding to the third requirement level information RLI3 is available.

In a fourth operation ④, the function manager 1212 may provide a done response, which indicates that the performance attribution of the virtual function VF is set, to the host device 1100 through the host interface circuit 1215.

In some example embodiments, the electronic device 1000 may differentially set the performance attribution of each of the plurality of virtual functions VF. For example, the storage device 1200 may receive the request RQ indicating a setting operation of the first and second virtual functions VF1 and VF2 from the host device 1100. Based on the request RQ, the storage device 1200 may set a first maximum power consumption value permitted for the first virtual function VF1 and may set a second maximum power consumption value permitted for the second virtual function VF2. The first maximum power consumption value may be different from the second maximum power consumption value.

Because the data I/O speed is correlated with power consumption, the limitation of the maximum power consumption value may be similar to the limitation of the data I/O speed. That is, the storage device 1200 may differently set the data I/O speed to be permitted for the first virtual machine VM1 and the data I/O speed to be permitted for the second virtual machine VM2 by differentially setting the first and second maximum power consumption values of the first and second virtual functions VF1 and VF2.

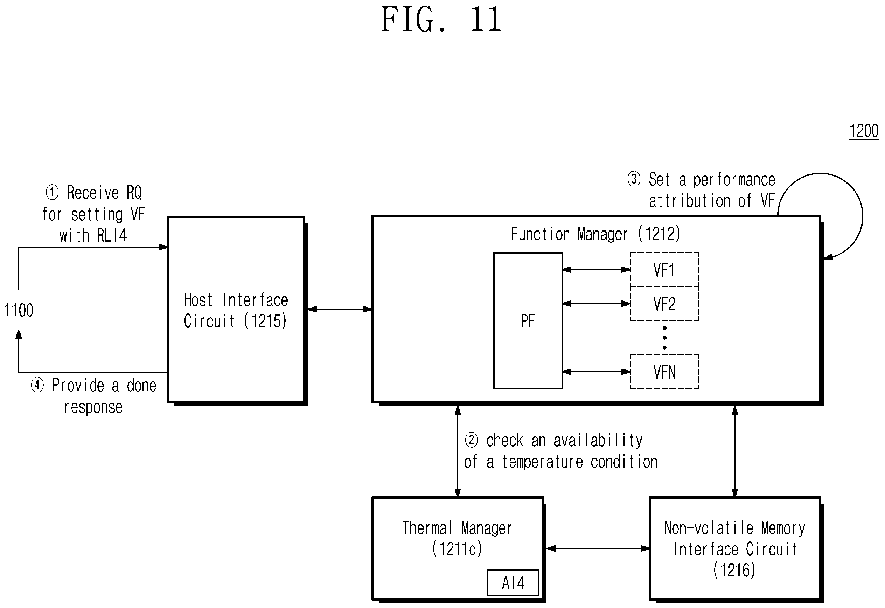

FIG. 11 is a diagram describing some example embodiments of the method of FIG. 7, according to some example embodiments of the present disclosure. Referring to FIGS. 7 and 11, the storage device 1200 may communicate with the host device 1100. The storage device 1200 may include the thermal manager 1211d, the function manager 1212, the host interface circuit 1215, and the non-volatile memory interface circuit 1216.

The thermal manager 1211d may store fourth attribution information AI4. The fourth attribution information AI4 may indicate performance attributions defining maximum heat generation temperature values permitted for the respective virtual functions VF1 to VFN.

The function manager 1212 may include the physical function PF and the plurality of virtual functions VF1 to VFN. The plurality of virtual functions VF1 to VFN may correspond to the plurality of virtual machines VM1 to VMN executable by the host device 1100.

The plurality of virtual functions VF1 to VFN may receive data from the plurality of virtual machines VM1 to VMN or may provide data to the plurality of virtual machines VM1 to VMN. Heat may be generated in the above processes. Excessive heat may increase the power consumption of the storage device 1200 and/or may cause device damage. To prevent or reduce the above issue, the storage device 1200 may reduce a heat generation level by intentionally reducing a device performance before reaching a permitted maximum heat generation temperature value through thermal throttling. That is, the heat generation level may also be a limited resource permitted for the storage device 1200. The thermal manager 1211d may distribute the resource to the plurality of virtual functions VF1 to VFN by adjusting the heat generation level permitted for each of the virtual functions VF1 to VFN.

Below, the method of operating the electronic device 1000 according to some example embodiments of the present disclosure will be described.

In a first operation ①, the storage device 1200 may receive the request RQ indicating the setting operation of the virtual function VF. The virtual function VF may be one of the plurality of virtual functions VF1 to VFN generated by the function manager 1212. The virtual function VF may correspond to one of the virtual machines VM1 to VMN executable by the host device 1100. The request RQ may include fourth requirement level information RLI4. The fourth requirement level information RLI4 may indicate a performance level required by the virtual machine VM corresponding to the virtual function VF targeted for the setting operation.

In a second operation ②, the function manager 1212 may determine whether a performance attribution corresponding to the fourth requirement level information RLI4 is available, with reference to the thermal manager 1211d. The performance attribution may define the maximum heat generation temperature value (for example, a temperature condition) which is permitted for the virtual function VF targeted for the setting operation. When it is determined that the performance attribution is unavailable, the function manager 1212 may provide a fail response to the host device 1100. When it is determined that the performance attribution is available, the function manager 1212 may store the fourth attribution information AI4 indicating the performance attribution in the thermal manager 1211d and may then perform a next operation.

In a third operation ③, the function manager 1212 may set the performance attribution of the virtual function VF, which corresponds to the fourth requirement level information RLI4, in response to determining that the performance attribution corresponding to the fourth requirement level information RLI4 is available.

In a fourth operation ④, the function manager 1212 may provide a done response, which indicates that the performance attribution of the virtual function VF is set, to the host device 1100 through the host interface circuit 1215.

In some example embodiments, the electronic device 1000 may differentially set the performance attribution of each of the plurality of virtual functions VF. For example, the storage device 1200 may receive the request RQ indicating a setting operation of the first and second virtual functions VF1 and VF2 from the host device 1100. Based on the request RQ, the storage device 1200 may set a first maximum heat generation temperature value permitted for the first virtual function VF 1 and may set a second maximum heat generation temperature value permitted for the second virtual function VF2. The first maximum heat generation temperature value may be different from the second maximum heat generation temperature value.

Because the heat generation of the storage device 1200 is the by-product of an operation of processing data, the limitation of the maximum heat generation temperature value may be similar to the limitation of the data I/O speed. That is, the storage device 1200 may differently set the data I/O speed to be permitted for the first virtual machine VM1 and the data I/O speed to be permitted for the second virtual machine VM2 by differentially setting the first and second maximum heat generation temperature values of the first and second virtual functions VF1 and VF2.

FIG. 12 is a graph describing data performance of an electronic device according to some example embodiments of the present disclosure. Graphs of data performance of a storage device supporting a plurality of virtual functions VF for a plurality of virtual machines VM will be described with reference to FIG. 12.

Referring to the graph of a conventional storage device supporting virtual functions VF with the same data performance, the horizontal axis represents a time, and the vertical axis represents data performance. In this case, the data performance may refer to the data I/O speed of the storage device. The conventional storage device is provided for better understanding of the present disclosure and is not intended to limit the scope of the present disclosure. Characteristics of the conventional storage device may include characteristics of the present disclosure, which are not disclosed in the documents of the information disclosure statement.

The conventional storage device may support first to third virtual functions VF1 to VF3. A solid line indicates the performance characteristic of the first virtual function VF 1, a long dashed line indicates the performance characteristic of the second virtual function VF2, and a dashed line indicates the performance characteristic of the third virtual function VF3. According to Fig. 12 the performance data with VMs allocated substantially the same resources is essentially overlapping such that the traces are inseparable in Fig. 12. The conventional storage device may fail to assign differential performance attributions to the first to third virtual functions VF1 to VF3. In this case, the data bandwidth of a specific virtual function among the first to third virtual functions VF1 to VF3 may be insufficient, or the data bandwidth may be unnecessarily assigned to any other virtual function.

For example, referring to a point in time Tpa, a specific virtual function among the first to third virtual functions VF1 to VF3 may excessively use the data bandwidth of the conventional storage device. As such, at the same point in time, the unintended drop-off of the data performance may be caused in any other virtual function. Likewise, referring to a point in time Tpb, as a specific virtual function among the first to third virtual functions VF1 to VF3 excessively uses the data bandwidth, the unintended drop-off of the data performance may be caused in any other virtual function. The unintended drop-off may cause the decrease in the overall data I/O speed of the conventional storage device or may increase the probability that an error occurs in data.

Referring to the graph of a storage device supporting virtual functions VF with differential data performance, the horizontal axis represents a time, and the vertical axis represents data performance. The storage device supporting virtual functions VF with differential data performance may be referred to as a "storage device of the present disclosure" and may correspond to the storage device 1200 described with reference to FIGS. 1, 3, 4, 5, 6, 7, 8, 9, 10, and 11.

The storage device of the present disclosure may support the first to third virtual functions VF1 to VF3. A solid line (upper trace) indicates the performance characteristic of the first virtual function VF1, a long dashed line (middle trace) indicates the performance characteristic of the second virtual function VF2, and a dashed line (lower trace) indicates the performance characteristic of the third virtual function VF3. The storage device of the present disclosure may assign differential performance attributions to the first to third virtual functions VF1 to VF3. As such, the total data bandwidth of the storage device of the present disclosure may be efficiently distributed to the first to third virtual functions VF1 to VF3. For example, the widest data bandwidth may be assigned to the third virtual function VF3. The narrowest data bandwidth may be assigned to the first virtual function VF1.

According to the graph of the storage device of the present disclosure, because an appropriate level of data bandwidth is assigned for each of the first to third virtual functions VF1 to VF3, the insufficiency or wasting of the data bandwidth in the first to third virtual functions VF1 to VF3 may be suppressed. Accordingly, the unintended drop-off of the data performance may be suppressed from occurring in a specific virtual function of the first to third virtual functions VF1 to VF3. That is, as the data bandwidth is differentially distributed, the efficiency of resource distribution may be improved in the whole system of the storage device of the present disclosure.

For example, according to some example embodiments, there may be an increase in speed, accuracy, device longevity, and/or power efficiency of the virtual machines, host devices, and storage devices based on the above methods. Therefore, the improved devices and methods overcome the deficiencies of the conventional devices and methods of hosting and processing virtual machines related to including usage of virtual machines across systems while reducing resource consumption, improving device longevity, increasing data accuracy, and increasing data clarity. Further, there is an improvement in a flexible system environment provided to the user, reduction in speed due to bottlenecks between virtual machines is suppressed, security may be improved by the input/output (I/O) isolation between virtual machines, and efficiency of resource distribution in the whole system (virtual and physical) is improved.

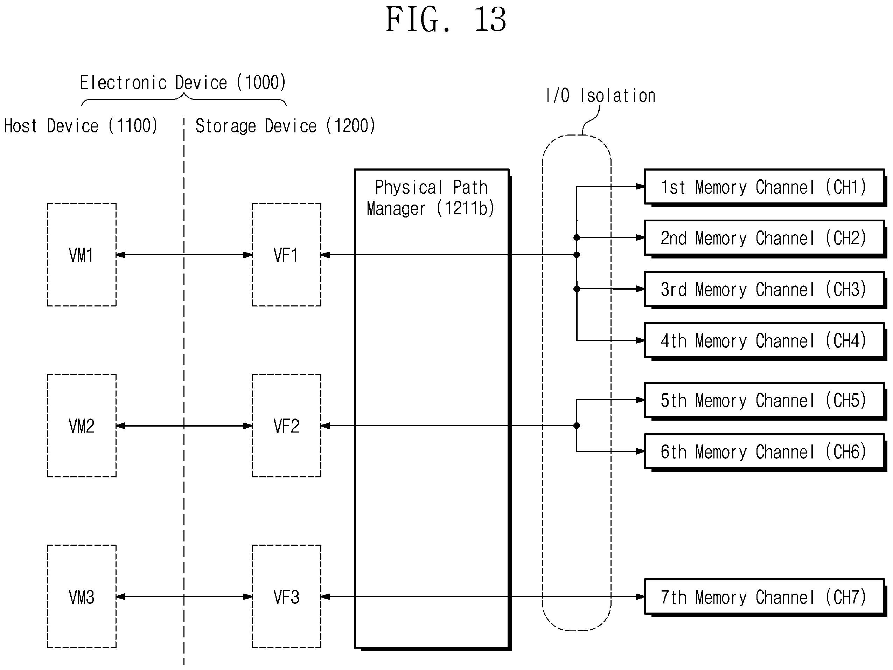

FIG. 13 is a diagram describing physical paths of an electronic device according to some example embodiments of the present disclosure. Referring to FIG. 13, the electronic device 1000 may include the host device 1100 and the storage device 1200.

The host device 1100 may execute the first to third virtual machines VM1 to VM3. The storage device 1200 may generate the first to third virtual functions VF1 to VF3 corresponding to the first to third virtual machines VM1 to VM3 depending on the request of the host device 1100. The storage device 1200 may include the physical path manager 1211b and first to seventh memory channels CH1 to CH7. Each of the first to seventh memory channels CH1 to CH7 may be connected to corresponding memory chips.

The physical path manager 1211b may set a first physical path for the first virtual function VF1. The first physical path may connect the first to fourth memory channels CH1 to CH4 to the first virtual function VF1. That is, the first physical path may exclusively allocate the memory chips connected to the first to fourth memory channels CH1 to CH4 to the first virtual function VF1.

The physical path manager 1211b may set a second physical path for the second virtual function VF2. The second physical path may connect the fifth and sixth memory channels CH5 and CH6 to the second virtual function VF2. That is, the second physical path may exclusively allocate the memory chips connected to the fifth and sixth memory channels CH5 and CH6 to the second virtual function VF2.

The physical path manager 1211b may set a third physical path for the third virtual function VF3. The third physical path may connect the seventh memory channel CH7 to the third virtual function VF3. That is, the third physical path may exclusively allocate the memory chips connected to the seventh memory channel CH7 to the third virtual function VF3.

In some example embodiments, the first to third physical paths may be physically separated from each other. According to the above description, the data I/Os for the first to third virtual machines VM1 to VM3 may be physically isolated. The I/O isolation may make it possible to suppress the bottleneck between the first to third virtual machines VM1 to VM3, to implement the load-balancing between different memory channels, and to improve the data security between the first to third virtual machines VM1 to VM3.

FIG. 14 is a diagram describing how a resource of an electronic device is differentially distributed, according to some example embodiments of the present disclosure. Referring to FIG. 14, the electronic device 1000 may include the host device 1100 and the storage device 1200. The host device 1100 and the storage device 1200 may communicate with each other in compliance with the NVMe protocol.

The host device 1100 may execute the first to third virtual machines VM1 to VM3. The first virtual machine VM1 may include a first submission queue SQ1 and a first completion queue CQ1. The first submission queue SQ1 may include a plurality of data chunks DT. For example, the data chunk DT may be a chunk including 4,000 data tokens, but the present disclosure is not limited thereto. The first virtual function VF1 may fetch the data chunk DT of the first submission queue SQ1, may process a request of the first virtual machine VM1 based on the fetched data chunk DT, and may write a completion indicating that the request is processed in the first completion queue CQ1 in the form of the data chunk DT.

Likewise, the second virtual machine VM2 may include a second submission queue SQ2 and a second completion queue CQ2. The second virtual function VF2 may fetch the data chunk DT of the second submission queue SQ2, may process a request of the second virtual machine VM2 based on the fetched data chunk DT, and may write a completion indicating that the request is processed in the second completion queue CQ2 in the form of the data chunk DT.

As in the above description, the third virtual machine VM3 may include a third submission queue SQ3 and a third completion queue CQ3. The third virtual function VF3 may fetch the data chunk DT of the third submission queue SQ3, may process a request of the third virtual machine VM3 based on the fetched data chunk DT, and may write a completion indicating that the request is processed in the third completion queue CQ3 in the form of the data chunk DT.

The data performance manager 1211a may store attribution information indicating the performance attributions of the first to third virtual functions VF1 to VF3. The performance attribution may define the transmission speed of the data chunk DT to be output to a completion queue by the corresponding virtual function.

For example, the data performance manager 1211a may limit the transmission speed of the data chunk DT to be output to the first completion queue CQ1 by the first virtual function VF1 to four data chunks DT per second. The data performance manager 1211a may limit the transmission speed of the data chunk DT to be output to the second completion queue CQ2 by the second virtual function VF2 to two data chunks DT per second. The data performance manager 1211a may limit the transmission speed of the data chunk DT to be output to the third completion queue CQ3 by the third virtual function VF3 to one data chunk DT per second.

That is, in the environment where the NVMe protocol is supported, the data performance manager 1211a may differentially set the data performance for each virtual function by individually setting a speed at which the data chunk DT is output from each virtual function to the corresponding completion queue.

According to some example embodiments of the present disclosure, storage devices setting a performance attribution and methods of operating the same are provided.

Also, as a resource is differentially distributed for each virtual machine, a flexible system environment may be provided to the user, the reduction in speed due to bottlenecks between virtual machines may be suppressed, the security may be improved by the input/output (I/O) isolation between virtual machines, and the efficiency of resource distribution in the whole system may be improved.

As described herein, any electronic devices and/or portions thereof according to any of the example embodiments may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a DRAM device, storing a program of instructions, and a processor (e.g., CPU) configured to execute the program of instructions to implement the functionality and/or methods performed by some or all of any devices, systems, modules, units, controllers, circuits, architectures, and/or portions thereof according to any of the example embodiments, and/or any portions thereof.

While the present disclosure has been described with reference to example embodiments thereof, it will be apparent to those of ordinary skill in the art that various changes and modifications may be made thereto without departing from the scope of the present disclosure as set forth in the following claims.

Embodiments are set out in the following clauses.
1. A method of operating a storage device which communicates with a host device, the method comprising:
   receiving a first request indicating a setting operation of a first virtual function corresponding to a first virtual machine from the host device executing the first virtual machine, the first request including first requirement level information of the first virtual machine;
   setting a first performance attribution of the first virtual function, based on the first requirement level information; and
   providing the host device with a done response indicating that the first performance attribution is set.
2. The method of clause 1, wherein
   the first requirement level information indicates a performance level for the first virtual machine, and
   the first performance attribution defines a data bandwidth allocated to the first virtual function.
3. The method of clause 1, wherein
   the first requirement level information indicates a performance level for the first virtual machine, and
   the first performance attribution defines a physical path connected to memory chips exclusively allocated to the first virtual function from among a plurality of memory chips in the storage device.
4. The method of clause 1, wherein
   the first requirement level information indicates a performance level for the first virtual machine, and
   the first performance attribution defines a maximum power consumption value permitted for the first virtual function.
5. The method of clause 1, wherein
   the first requirement level information indicates a performance level for the first virtual machine, and
   the first performance attribution defines a maximum heat generation temperature value permitted for the first virtual function.
6. The method of clause 1, wherein the storage device includes:
   a physical function configured to communicate with the host device;
   a plurality of virtual functions executable by the physical function; and
   an attribution manager configured to manage a plurality of performance attributions respectively corresponding to the plurality of virtual functions,
   the plurality of virtual functions including the first virtual function, and
   the plurality of performance attributions including the first performance attribution.
7. The method of clause 6, wherein the setting of the first performance attribution of the first virtual function based on the first requirement level information includes:
   providing, by the physical function, a second request for checking an availability of the first requirement level information to the attribution manager;
   determining, by the attribution manager, whether the first performance attribution corresponding to the first requirement level information is available, based on the second request;
   in response to determining that the first performance attribution is available, storing, by the attribution manager, first attribution information indicating the first performance attribution and providing an available response to the physical function;
   setting, by the physical function, the first performance attribution of the first virtual function, based on the available response; and
   generating, by the physical function, the done response indicating that the first performance attribution is set.
8. The method of clause 6, wherein the setting of the first performance attribution of the first virtual function based on the first requirement level information includes:
   providing, by the physical function, a second request for checking an availability of the first requirement level information to the attribution manager;
   determining, by the attribution manager, whether the first performance attribution corresponding to the first requirement level information is available, based on the second request;
   providing, by the attribution manager, an unavailable response to the physical function, in response to determining that the first performance attribution is unavailable; and
   providing, by the physical function, the host device with a fail response indicating that the first performance attribution is not set, based on the unavailable response.
9. The method of clause 6, further comprising:
   after providing the done response to the host device, receiving, by the physical function, a third request indicating an attribution information read operation from the host device;
   providing, by the physical function, the attribution manager with a fourth request for obtaining first attribution information corresponding to the first performance attribution of the first virtual function, based on the third request;
   providing, by the attribution manager, the physical function with the first attribution information stored while setting the first performance attribution, based on the fourth request; and
   providing, by the physical function, the first attribution information provided from the attribution manager to the host device.
10. The method of clause 1, further comprising:
   after providing the done response to the host device, receiving a fifth request indicating a memory operation from the host device, wherein the memory operation includes at least one of a write operation, a read operation, a delete operation, a re-setting operation of the first virtual function, or a deallocation operation of the first virtual function by the first virtual machine; and
   performing the memory operation based on the fifth request.
11. The method of clause 1, further comprising:
   before receiving the first request, receiving a power voltage from the host device;
   activating a physical function based on the power voltage;
   before receiving the first request, receiving a sixth request for generating the first virtual function; and
   generating, by the activated physical function, the first virtual function based on the sixth request.
12. The method of clause 1, wherein
   the first request further indicates a setting operation of a second virtual function corresponding to a second virtual machine executable by the host device and further includes second requirement level information of the second virtual machine,
   the method further comprises setting a second performance attribution of the second virtual function, based on the second requirement level information,
   the done response further indicates that the second performance attribution is set, and the second performance attribution is different from the first performance attribution.
13. The method of clause 12, wherein
   the first performance attribution defines a first data bandwidth allocated to the first virtual function,
   the second performance attribution defines a second data bandwidth allocated to the second virtual function, and
   the first data bandwidth is different from the second data bandwidth.
14. The method of clause 12, wherein
   the first performance attribution defines a first physical path connected to first memory chips exclusively allocated to the first virtual function from among a plurality of memory chips in the storage device,
   the second performance attribution defines a second physical path connected to second memory chips exclusively allocated to the second virtual function from among the plurality of memory chips in the storage device, and
   an input/output of the first physical path is separated from an input/output of the second physical path.
15. The method of clause 1, wherein
   the storage device and the host device are configured to communicate with each other based on an NVMe (Non-Volatile Memory express) protocol, and
   the first performance attribution defines a transmission speed of a data chunk to be output to a completion queue by the first virtual function.
16. A method of operating a storage device which communicates with a host device, the method comprising:
   receiving a first request indicating a setting operation of a first virtual function and a second virtual function from the host device executing a first virtual machine and a second virtual machine, the first virtual function corresponding to the first virtual machine, the second virtual function corresponding to the second virtual machine, and the first request including first requirement level information of the first virtual machine and second requirement level information of the second virtual machine;
   setting a first performance attribution of the first virtual function, based on the first requirement level information;
   setting a second performance attribution of the second virtual function, based on the second requirement level information, the second performance attribution being different from the first performance attribution; and
   providing the host device with a done response indicating that the first and second performance attributions are set.
17. The method of clause 16, further comprising:
   after providing the done response to the host device, receiving a second request indicating an attribution information read operation from the host device; and
   providing the host device with first attribution information stored while setting the first performance attribution and second attribution information stored while setting the second performance attribution, based on the second request.
18. The method of clause 16, wherein
   the first performance attribution defines at least one of a first data bandwidth allocated to the first virtual function, a first physical path connected to first memory chips exclusively allocated to the first virtual function from among a plurality of memory chips in the storage device, a first maximum power consumption value permitted for the first virtual function, and a first maximum heat generation temperature value permitted for the first virtual function, and
   the second performance attribution defines at least one of a second data bandwidth allocated to the second virtual function, a second physical path connected to second memory chips exclusively allocated to the first virtual function from among the plurality of memory chips in the storage device, a second maximum power consumption value permitted for the second virtual function, and a second maximum heat generation temperature value permitted for the second virtual function.
19. A storage device comprising:
   a non-volatile memory device;
   a function manager including a physical function configured to communicate with a host device executing a virtual machine and a virtual function corresponding to the virtual machine; and
   an attribution manager configured to manage a resource to be provided from the non-volatile memory device to the virtual function,
   the physical function is configured to:
      receive a request indicating a setting operation of the virtual function and including requirement level information of the virtual machine from the host device;
      determine whether a performance attribution corresponding to the requirement level information is available, with reference to the attribution manager;
      set the performance attribution of the virtual function, in response to determining that the performance attribution is available; and
      provide the host device with a done response indicating that the performance attribution is set.
20. The storage device of clause 19, wherein the performance attribution defines at least one of:
   a data bandwidth allocated to the virtual function;
   a physical path connected to memory chips exclusively allocated to the virtual function from among a plurality of memory chips in the non-volatile memory device;
   a maximum power consumption value permitted for the virtual function; and
   a maximum heat generation temperature value permitted for the virtual function.
21. A method of operating a storage device which communicates with a host device, the method comprising:
   receiving a first request indicating a setting operation of a first virtual function corresponding to a first virtual machine from the host device executing the first virtual machine, the first request including first requirement level information of the first virtual machine;
   setting a first performance attribution of the first virtual function, based on the first requirement level information;
   determining that the first performance attribution is unavailable; and
   providing the host device with a fail response indicating that the first performance attribution is not set.

## Claims

1. A method of operating a storage device which communicates with a host device, the method comprising:
receiving a first request indicating a setting operation of a first virtual function corresponding to a first virtual machine from the host device executing the first virtual machine, the first request including first requirement level information of the first virtual machine;
setting a first performance attribution of the first virtual function, based on the first requirement level information; and
providing the host device with a done response indicating that the first performance attribution is set.

2. The method of claim 1, wherein
the first requirement level information indicates a performance level for the first virtual machine, and
the first performance attribution defines a data bandwidth allocated to the first virtual function.

3. The method of claim 1 or 2, wherein
the first requirement level information indicates a performance level for the first virtual machine, and
the first performance attribution defines a physical path connected to memory chips exclusively allocated to the first virtual function from among a plurality of memory chips in the storage device.

4. The method of claim 1, 2 or 3, wherein
the first requirement level information indicates a performance level for the first virtual machine, and
the first performance attribution defines a maximum power consumption value permitted for the first virtual function.

5. The method of any preceding claim, wherein
the first requirement level information indicates a performance level for the first virtual machine, and
the first performance attribution defines a maximum heat generation temperature value permitted for the first virtual function.

6. The method of any preceding claim, wherein the storage device includes:
a physical function configured to communicate with the host device;
a plurality of virtual functions executable by the physical function; and
an attribution manager configured to manage a plurality of performance attributions respectively corresponding to the plurality of virtual functions,
the plurality of virtual functions including the first virtual function, and
the plurality of performance attributions including the first performance attribution.

7. The method of claim 6, wherein the setting of the first performance attribution of the first virtual function based on the first requirement level information includes:
providing, by the physical function, a second request for checking an availability of the first requirement level information to the attribution manager;
determining, by the attribution manager, whether the first performance attribution corresponding to the first requirement level information is available, based on the second request;
in response to determining that the first performance attribution is available, storing, by the attribution manager, first attribution information indicating the first performance attribution and providing an available response to the physical function;
setting, by the physical function, the first performance attribution of the first virtual function, based on the available response; and
generating, by the physical function, the done response indicating that the first performance attribution is set.

8. The method of claim 6, wherein the setting of the first performance attribution of the first virtual function based on the first requirement level information includes:
providing, by the physical function, a second request for checking an availability of the first requirement level information to the attribution manager;
determining, by the attribution manager, whether the first performance attribution corresponding to the first requirement level information is available, based on the second request;
providing, by the attribution manager, an unavailable response to the physical function, in response to determining that the first performance attribution is unavailable; and
providing, by the physical function, the host device with a fail response indicating that the first performance attribution is not set, based on the unavailable response.

9. The method of any of claims 6 to 8, further comprising:
after providing the done response to the host device, receiving, by the physical function, a third request indicating an attribution information read operation from the host device;
providing, by the physical function, the attribution manager with a fourth request for obtaining first attribution information corresponding to the first performance attribution of the first virtual function, based on the third request;
providing, by the attribution manager, the physical function with the first attribution information stored while setting the first performance attribution, based on the fourth request; and
providing, by the physical function, the first attribution information provided from the attribution manager to the host device.

10. The method of any preceding claim, further comprising:
after providing the done response to the host device, receiving a fifth request indicating a memory operation from the host device, wherein the memory operation includes at least one of a write operation, a read operation, a delete operation, a re-setting operation of the first virtual function, or a deallocation operation of the first virtual function by the first virtual machine; and
performing the memory operation based on the fifth request.

11. The method of any preceding claim, further comprising:
before receiving the first request, receiving a power voltage from the host device;
activating a physical function based on the power voltage;
before receiving the first request, receiving a sixth request for generating the first virtual function; and
generating, by the activated physical function, the first virtual function based on the sixth request.

12. The method of any preceding claim, wherein
the first request further indicates a setting operation of a second virtual function corresponding to a second virtual machine executable by the host device and further includes second requirement level information of the second virtual machine,
the method further comprises setting a second performance attribution of the second virtual function, based on the second requirement level information,
the done response further indicates that the second performance attribution is set, and
the second performance attribution is different from the first performance attribution.

13. The method of claim 12, wherein
the first performance attribution defines a first data bandwidth allocated to the first virtual function,
the second performance attribution defines a second data bandwidth allocated to the second virtual function, and
the first data bandwidth is different from the second data bandwidth.

14. The method of claim 12, wherein
the first performance attribution defines a first physical path connected to first memory chips exclusively allocated to the first virtual function from among a plurality of memory chips in the storage device,
the second performance attribution defines a second physical path connected to second memory chips exclusively allocated to the second virtual function from among the plurality of memory chips in the storage device, and
an input/output of the first physical path is separated from an input/output of the second physical path.

15. The method of any preceding claim, wherein
the storage device and the host device are configured to communicate with each other based on an NVMe (Non-Volatile Memory express) protocol, and
the first performance attribution defines a transmission speed of a data chunk to be output to a completion queue by the first virtual function.
